**Europäisches Patentamt**

**European Patent Office**

**Office européen des brevets**

(19)

(11) Veröffentlichungsnummer: **0 275 034 B1**

# (12) EUROPÄISCHE PATENTSCHRIFT

(45) Veröffentlichungstag der Patentschrift: **03.06.92**

(21) Anmeldenummer: **88100146.5**

(22) Anmeldetag: **08.01.88**

(51) Int. Cl.⁵: **C08F 299/04**, C08G 63/54, C08K 5/51

(54) **Ungesättigte DCPD-Polyesterharze mit erhöhter Härtungsaktivität.**

(30) Priorität: **15.01.87 DE 3701009**

(43) Veröffentlichungstag der Anmeldung:
**20.07.88 Patentblatt 88/29**

(45) Bekanntmachung des Hinweises auf die
Patenterteilung:
**03.06.92 Patentblatt 92/23**

(84) Benannte Vertragsstaaten:
**DE ES FR GB IT NL SE**

(56) Entgegenhaltungen:
**EP-A- 0 097 909**
**EP-A- 0 172 115**
**US-A- 3 933 757**

(73) Patentinhaber: **BASF Aktiengesellschaft**
**Carl-Bosch-Strasse 38**
**W-6700 Ludwigshafen(DE)**

(72) Erfinder: **Holoch, Jan, Dr.**
**Koenigsberger Strasse 22 a**
**W-6906 Leimen(DE)**

**Beschreibung**

Die Erfindung betrifft Harzmassen auf Basis von ungesättigten Polyestern mit Dihydrodicyclopentadienylendgruppen, die eine erhöhte Härtungsaktivität aufweisen.

Härtbare ungesättigte Polyesterharze neigen beim Lagern zu vorzeitigem Gelieren, auch wenn sie keine oder nur bei verhältnismäßig hohen Temperaturen zerfallende Peroxid-Initiatoren enthalten. Zur Verlängerung der Lagerstabilität setzt man den Harzmassen daher Inhibitoren, meist auf Basis von Hydrochinonderivaten, zu.

Nach der DD-A-2 001 366 wird die Lagerstabilität auch bei höheren Temperaturen über einen längeren Zeitraum hinweg durch den Zusatz von phenolischen Inhibitoren zusammen mit Estern der phosphorigen Säure bewirkt. Die Härtungsaktivität der Kobalt-beschleunigten Kalthärtung mit z.B. Methyl-ethyl-ketonperoxid wird dabei aber wenig beeinflußt: Die Härtungszeit wird nur geringfügig verkürzt und die maximale Temperatur während der Härtung wird etwas herabgesetzt.

Bei ungesättigten Polyesterharzen, die Dihydrodicyclopentadienylendgruppen enthalten und mit einem üblichen phenolischen Inhibitor stabilisiert sind, ist die Härtungsaktivität unbefriedigend: Die Kobalt-beschleunigte Kalthärtung ist zu langsam und das Temperaturmaximum ist so gering, daß die Härtung unvollständig bleibt. Der Erfindung lag also die Aufgabe zugrunde, die Härtungsaktivität von ungesättigten Polyesterharzen, die Dihydrodicyclopentadienylendgruppen enthalten, zu erhöhen.

Diese Aufgabe wird erfindungsgemäß gelöst durch den gemeinsamen Zusatz von üblichen phenolischen Inhibitoren und einem Phosphin oder einem Ester der phosphorigen Säure. Durch diesen Zusatz von Phosphinen oder Estern der phosphorigen Säure. Durch diesen Zusatz von Phosphinen oder Estern der phosphorigen Säure zu den Harzen wird nicht nur deren Lagerstabilität etwas verbessert, sondern auch die Kobalt-katalysierte Kalthärtung wird wesentlich beschleunigt. Das war auch deshalb überraschend, weil bei Standardharzen sowie bei ungesättigten Polyesterharzen, die Cyclohexengruppen enthalten (z.B. Tetrahydrophthalsäure, Endomethylentetrahydrophthalsäure) die Aktivität der Kobalt-beschleunigten Kalthärtung durch den erfindungsgemäßen Zusatz praktisch nicht verändert wird.

Gegenstand der Erdingung sind demzufolge härtbare Formmassen aus

A. einem ungesättigten Polyester, der Dihydrodicyclopentadienyl-Endgruppen aufweist,

B. copolymerisierbaren Monomeren,

C. üblichen Zusatzstoffen und Hilfsmitteln,

D. üblichen Härtungskatalysatoren,

E. einem phenolischen oder chinonischen Inhibitor, und

F. 100-20.000 ppm, bezogen auf A + B, eines Phosphins oder Esters der phosphorigen Säure.

Zu den einzelnen Komponenten ist folgendes zu sagen:

A. Ausgangsmaterial für die Polyester mit Dihydrodicyclopentadienylendgruppen sind ungesättigte Polyester aus ethylenisch ungesättigten Dicarbonsäuren und Diolen. Als ethylenisch ungesättigte Dicarbonsäuren kommen insbesondere Maleinsäure, Fumarsäure, Itaconsäure, sowie deren Anhydride in Frage, wobei Maleinsäureanhydrid bevorzugt ist. Daneben können andere Carbonsäuren, wie Adipinsäure, o-Phthalsäureanhydrid, Trimellithsäure, Pyromellithsäure oder dern Anydride mitverwendet werden.

Geeignete Diole sind z.B. Propylenglykol-1,2, Ethylenglykol, Diethylenglykol, Butandiol-1,3, Butandiol-1,4, Neopentylglykol sowie hydriertes Bisphenol A. Daneben können Polyole, wie Trimethylolpropan, Glyzerin und Pentaerythrit mitverwendet werden. Die Herstellung der ungesättigten Polyester mit Dihydrodicyclopentadienylendgruppen ist bekannt. Der Polyester wird mit Dicyclopentadien bzw. dessen Derivaten oder Substitutionsprodukten modifiziert. Wenn man von Diestern mit hoher Säurezahl oder freier Maleinsäure ausgeht und bei Temperaturen zwischen 120 und 140°C arbeitet, erhält man im wesentlichen eine Addition des Dicyclopentadiens an endständige Carboxyl- bzw. Hydroxylgruppen, wobei sich endständige Dihydrodicyclopentadienylester- oder Dihydrodicyclopentadienylethergruppen bilden.

B. Die modifizierten ungesättigten Polyester sind in copolymerisierbaren Monomeren gelöst, wobei üblicherweise 30 bis 100 Gew.-Teile Monomer B auf 100 Gew.-Teile Polyester A verwendet werden. Geeignete Vinylmonomere sind z.B. Styrol, Methylstryrol, Chlorstyrol oder Methylmethacrylat. Darüber hinaus können bevorzugt zusätzlich noch Monomere verwendet werden, die erst bei höheren Temperaturen polymerisieren, z.B. Diallylphthalat, trans-Endomethylentetrahydrophthalsäurediethylester oder Endomethylentetrahydrophthalsäuredihydroxyethylester.

C. Übliche Zusatzstoffe und Hilfsmittel sind z.B. Verstärkungs- und Füllstoffe, wie Glasfasern, Kohlenstoffasern und organische Fasern als Roving, Matten oder Gewebe, Glaskugeln, Glasmirkrohohlkugeln; Aluminiumhydroxid, Siliciumdioxid, Kreide, Talkum, Sand und Holzmehl; Pigmente, wie Titandioxid, Verdichungsmittel, wie Magnesiumoxid oder Polyisocyanate; schrumpfmindernde Zusätze, wie Polysty-

2

rol, Polyvinylacetat oder Polymethylmethacrylat; Elastifiziermittel, wie Polyurethane oder Dienkautschuke; Flammschutzadditive, wie Decabromdiphenylether und Chlorparaffin; ferner Thixotropiermittel, Gleitmittel und Lösungsmittel.

D. Die Formmassen können die üblichen Härtungskatalysatoren enthalten. Dies können Peroxide sein, die eine Heißhärtung bewirken. Bevorzugt sind jedoch Systeme, welche eine Kalthärtung auslösen. In Frage kommen dabei Peroxide, wie z.B. Methylethylketonperoxid, Cyclohexanonperoxid, Acetylacetonperoxid, tert.-Butylhydroperoxid, Cumolhydroperoxid, Benzoylperoxid vorzugsweise in Mengen von 0,5 bis 4,0 Gew.%, bezogen auf A + B. Die Peroxide werden zusammen mit üblichen Beschleunigern eingesetzt, z.B. Amine oder Kobaltverbindungen. Bevorzugt sind Kobaltbeschleuniger, z.B. Kobaltoktoat, Kobaltnaphthenat, vorzugsweise in Mengen von 5 bis 50 ppm (bezogen auf Co).

E. Geeignete phenolische Inhibitoren sind z.B. Hydrochinon, Methylhydrochinon, Dimethyl- und Trimethylhydrochinone. Ferner sind Chinon und Chinonderivate geeignet. Sie werden in Mengen von 50 bis 1000 ppm, vorzugsweise 100 bis 300 ppm, bezogen auf das Gewicht von A + B, eingesetzt.

F. Komponente F sind organische Ester der phosphorigen Säure und organische Phosphine, z.B. Triphenylphosphin, Tributylphosphin, Tri-p-toluylphosphin, Trimethylphosphit, Triethylphosphit, Triisopropylphosphit und Triphenylphosphit.

Sie werden in Mengen von 100 bis 20.000 ppm, Ester der phosphorigen Säure vorzugsweise in Mengen von 1000 bis 10.000 ppm und Phosphine vorzugsweise in Mengen von 200 bis 1000 ppm, bezogen auf das Gewicht von A + B, eingesetzt.

Die erfindungsgemäßen Formassen können nach üblichen Methoden gehärtet werden. Bevorzugt ist die Kalthärtung bei Temperaturen unterhalb von 50°C, wobei dei üblichen Peroxide und Kobalt-Beschleuniger zugesetzt werden.

Ungesättigte Polyesterharze, die Dihydrodicyclopentadienylendgruppen enthalten, zeichnen sich durch hohe thermische Beständigkeit und Wärmeformbeständigkeit aus und sind überall dort einsetzbar, wo diese Eigenschaften, verbunden mit einer guten Chemikalienbeständigkeit und ausgezeichneten dielektrischen Eigenschaften verlangt werden, also z.B. auf dem Elektrosektor, im Motorraum des Automobils usw.

Die in den Beispielen genannten Teile und Prozente beziehen sich auf das Gewicht. Die Härtungen wurden mit 2 % MEKP-LA 3 (Peroxid Chemie) und 0,2 % Kobalt-Beschleuniger (enthält 1 % Co) ausgeführt. Gemessen wurde die maximale Temperatur $t_{max}$ bei der Härtung, sowie die Zeit bis zum Erreichen von $t_{max}$, als Maß für die Härtungsaktivität.

Beispiel 1

490 Teile Maleinsäureanhydrid, 594 Teile Dicyclopentadien und 81 Teile Wasser werden unter Rühren und Darüberleiten von Stickstoff langsam auf 140°C erhitzt und eine Stunde bei dieser Temperatur gehalten. 180 Teile Ethylenglykol werden hinzugefügt, es wird auf 190°C aufgeheizt und bis zu einer Säurezahl von 26 verestert. 1200 Teile des so erhaltenen ungesättigten Polyesters werden nach Zugabe von 0,179 Teilen Hydrochinon bei Temperaturen unter 120°C in 591 Teilen Styrol gelöst. In zwei weiteren Ansätzen wurden 0,05 % Triphenylphosphin (TPP) bzw. 0,5 % Triphenylphosphit (TPPT) zugesetzt.

| | UP-Harz ohne Zusatz | + 0,05 % TPP | + 0,5 % TPPT |
|---|---|---|---|
| Zeit bis $t_{max}$ [min] | 75 | 44 | 49 |
| $t_{max}$ [°C] | 43 | 108 | 90 |
| Lagerstabilität (80°C) [h] | 16 | 24 | 52 |

Beispiel 2

Beispiel 1 wird mit 490 Teilen Maleinsäureanhydrid, 198 Teilen Dicyclopentadien, 27 Teilen Wasser und 273 Teilen Ethylenglykol wiederholt. 850 Teile des ungesättigten Polyesters mit Säurezahl 26 werden nach Zugabe von 0,127 Teilen Hydrochinon in 419 Teilen Styrol gelöst.

| | | UP-Harz | Zusatz von | |
|---|---|---|---|---|
| | | ohne Zusatz | + 0.05 % TPP | + 0.5 % TPPT |
| Zeit bis $t_{max}$ | [min] | 80 | 42 | 44 |
| $t_{max}$ | [°C] | 87 | 120 | 112 |
| Lagerstabilität (80°C) | [h] | 28 | 46 | 110 |

Beispiel 3 (Vergleich)

334 Teil Isophthalsäure, 164 Teile Propylenglykol und 318 Teile Diethylenglykol werden unter Rühren und Darüberleiten von Stickstoff bei 190°C bis Säurezahl 15 verestert. Dabei wird ein Glykolverlust mit Hilfe eines Dephlegmators verhindert. 294 Teile Maleinsäureanhydrid werden hinzugefügt, und die Kondensation wird bis Säurezahl 38 fortgesetzt. 800 Teile des so erhaltenen ungesättigten Polyesters werden nach Zugabe von 0,123 Teilen Hydrochinon bei 110°C mit 431 Teilen Styrol abgemischt.

| | | UP-Harz | Zusatz von | |
|---|---|---|---|---|
| | | ohne Zusatz | + 0.05 % TPP | + 0.5 % TPPT |
| Zeit bis $t_{max}$ | [min] | 62 | 52 | 57 |
| $t_{max}$ | [°C] | 118 | 118 | 105 |
| Lagerstabilität (80°C) | [h] | 35 | 35 | 85 |

Beispiel 4

294 Teile Maleinsäureanhydrid, 351 Teile N-Hydroxyethyltetrahydrophthalimid und 174 Teile Ethylenglykol werden innerhalb von 2 Stunden unter Rühren und Darüberleiten von Stickstoff auf 200°C erhitzt. Bei dieser Temperatur wird bis Säurezahl 19 weiterkondensiert. 700 Teile des ungesättigten Polyesters werden mit 0,1 Teilen Methylhydrochinon und 300 Teilen Styrol gemischt.

| | | UP-Harz | Zusatz von | |
|---|---|---|---|---|
| | | ohne Zusatz | + 0.05 % TPP | + 0.5 % TPPT |
| Zeit bis $t_{max}$ | [min] | 23 | 23 | 23 |
| $t_{max}$ | [°C] | 132 | 124 | 132 |
| Lagerstabilität (80°C) | [h] | < 16 | < 16 | 16 |

**Patentansprüche**

1. Härtbare Formmassen aus
   A. einem ungesättigten Polyester, der Dihydrodicyclopentadienyl-Endgruppen aufweist,
   B. copolymerisierbaren Monomeren,
   C. üblichen Zusatzstoffen und Hilfsmitteln,
   D. üblichen Härtungskatalysatoren,
   E. einem phenolischen oder chinonischen Inhibitor, und
   F. 100-20.000 ppm, bezogen auf A + B, eines Phosphins oder Esters der phosphorigen Säure.

2. Verfahren zur Herstellung von Formkörpern durch Kalthärtung der Formmassen nach Anspruch 1, dadurch gekennzeichnet, daß man den Formmassen übliche, bei niedrigen Temperaturen zerfallende Peroxide, sowie übliche Beschleuniger, vorzugsweise Kobalt-Verbindungen zusetzt, und die Härtung bei Temperaturen unterhalb von 50°C durchführt.

## Claims

1. A curable molding material consisting of
   A. an unsaturated polyester which contains terminal dihydrodicyclopentadienyl groups,
   B. copolymerizable monomers,
   C. conventional additives and assistants,
   D. conventional curing catalysts,
   E. a phenolic or quinonoid inhibitor and
   F. 100-20,000 ppm, based on A + B, of a phosphine or an ester of phosphorous acid.

2. A process for the production of moldings by cold curing of a molding material as claimed in claim 1, wherein a conventional peroxide decomposing at low temperatures and a conventional accelerator, preferably a cobalt compound, are added to the molding material and curing is carried out at below 50°C.

## Revendications

1. Masses à mouler durcissables, se composant:
   A. d'un polyester insaturé qui présente des groupements terminaux dihydrodicyclopentadiényle,
   B. de monomères copolymérisables,
   C. d'additifs et d'adjuvants usuels,
   D. de catalyseurs de durcissement usuels,
   E. d'un inhibiteur phénolique ou quinonique et
   F. de 100 à 20 000 ppm, par rapport à A + B, d'une phosphine ou d'un ester de l'acide phosphoreux.

2. Procédé de fabrication de corps moulés par durcissement à froid des masses à mouler selon la revendication 1, caractérisé en ce qu'on ajoute, aux masses à mouler, des peroxydes usuels, se décomposant à basses températures, ainsi que des accélérateurs usuels, de préférence des composés du cobalt, et on procède au durcissement à des températures inférieures à 50°C.